Europäisches Patentamt

European Patent Office

Office européen des brevets

(11) Veröffentlichungsnummer : **0 022 899**
**B1**

(12) **EUROPÄISCHE PATENTSCHRIFT**

(45) Veröffentlichungstag der Patentschrift :
**19.05.82**

(51) Int. Cl.³ : **B 60 T 15/42**

(21) Anmeldenummer : **80101270.9**

(22) Anmeldetag : **12.03.80**

(54) **Entlüftungsventil für Schnellbremsbeschleuniger von Schienenfahrzeug-Druckluftbremsen.**

(30) Priorität : **21.07.79 DE 2929649**

(43) Veröffentlichungstag der Anmeldung :
**28.01.81 (Patentblatt 81/04)**

(45) Bekanntmachung des Hinweises auf die Patenterteilung : **19.05.82 Patentblatt 82/20**

(84) Benannte Vertragsstaaten :
**AT CH FR GB**

(56) Entgegenhaltungen :
**DE - A - 2 729 848**
**DE - B - 1 276 681**

(73) Patentinhaber : **Knorr-Bremse GmbH**
**Moosacher Strasse 80**
**D-8000 München 40 (DE)**

(72) Erfinder : **Rheindt, Kurt**
**Schumannstrasse 13**
**D-8228 Freilassing (DE)**
Erfinder : **Grünert, Wolfgang**
**Hilblestrasse 30/4**
**D-8000 München 19 (DE)**

Imprimerie Jouve, 18, rue St-Denis, 75001 Paris, France

Entlüftungsventil für Schnellbremsbeschleuniger von Schienenfahrzeug-Druckluftbremsen

Die Erfindung bezieht sich auf ein Entlüftungsventil für Schnellbremsbeschleuniger von Schienenfahrzeug-Druckluftbremsen, mit einem im Strömungskanal der von der Hauptluftleitung zur Atmosphäre abzulassenden Druckluft dem Luftauslaß zur Atmosphäre vorgeordneten Absperrventil, das von einem Kolben gesteuert ist, der in Öffnungsrichtung vom Druck der auszulassenden Luft entgegen der Kraft einer Feder belastet ist.

Bisher bekannte Schnellbremsbeschleuniger für Schienenfahrzeug-Druckluftbremsen, beispielsweise gemäß der DE-A-27 29 848, weisen ein von einem Kolben gesteuertes Auslaßventil auf, welches zwischen der Hauptluftleitung und einem Auslaßkanal des Schnellbremsbeschleunigers angeordnet ist. Bei eine Schnellbremsung andeutenden Druckabsenkungsgeschwindigkeiten in der Hauptluftleitung öffnet der Kolben dieses Auslaßventil und verbindet somit großquerschnittig die Hauptluftleitung mit dem Auslaßkanal. An den Auslaßkanal ist ein Luftbehälter, die sogenannte Übertragkammer angeschlossen; weiterhin steht der Auslaßkanal über eine Drossel ständig mit der Atmosphäre in Verbindung. Beim Öffnen des Auslaßventils wird somit eine bestimmte Menge Druckluft rasch in die Übertragkammer abgezapft, wodurch sich eine rasche Druckabsenkung in einem vom Volumen der Hauptluftleitung abhängigen Maß in der Hauptluftleitung einstellt und sodann eine über die Drossel verzögerte, weitere Druckabsenkung eintritt. Bei diesen Schnellbremsbeschleunigern nimmt die Übertragkammer wertvolles Bauvolumen in Anspruch und muß in ihrem Volumen auf das Volumen der jeweiligen Hauptluftleitung abgestimmt werden. Falls in einem Zugverband die dem den Schnellbremsbeschleuniger tragenden Fahrzeug benachbarten Fahrzeuge keine Schnellbremsbeschleuniger aufweisen bzw. deren Bremsanlage abgeschaltet ist, tritt eine bedeutende Änderung des dem Schnellbremsbeschleuniger zugeordneten Hauptluftleitungsvolumens ein, und infolge des konstant bleibenden Volumens der Übertragkammer kann der Schnellbremsbeschleuniger bei seinem Ansprechen eine nur ungenügende Druckabsenkung in der Hauptluftleitung bewirken. Weiterhin ist bei diesen Schnellbremsbeschleunigern zu bemängeln, daß nach ihrem Ansprechen der Druck in der Hauptluftleitung über die Drossel bis auf Atmosphärendruck abgesenkt wird, obwohl bereits bei einer Druckabsenkung in der Hauptluftleitung auf etwa 3,6 bar maximale Bremswirkung erzielt wird. Die weitere Druckabsenkung stellt somit einen unnötigen Druckluftverlust dar, der beim nachfolgenden Bremsenlösen ersetzt werden muß, das Lösen zeitlich verzögert und einen Energieverlust bewirkt.

Zum Vermeiden der ab Erreichen maximaler Bremswirkung unnötigen, weiteren Druckabsenkung bei einem Ansprechen des Schnellbremsbeschleunigers ist es bereits bekannt (US-A-2 861 587), einen Schnellbremsbeschleuniger nach den eingangs angegebenen Merkmalen auszubilden, wobei das Auslaßventil des Schnellbremsbeschleunigers mit einem Entlüftungsventil zusammengefaßt ist. Der Kolben des Entlüftungsventils ist dabei vom Druck in der zu entlüftenden Hauptluftleitung bzw. einer bei geöffnetem Entlüftungsventil mit dieser verbundenen Kammer beaufschlagt, wobei die Kammer ständig über eine Düse mit der Atmosphäre in Verbindung steht. Das Volumen der Kammer ist relativ klein, so daß sie im Gegensatz zu den bekannten Übertragkammern keine « Einschußwirkung » zur raschen, plötzlichen Druckabsenkung in der Hauptluftleitung aufweist. Hieraus ergibt sich, daß bei einem Ansprechen des Schnellbremsbeschleunigers die Hauptluftleitung im wesentlichen nur über die Drossel entlüftet wird, die Druckabsenkungsgeschwindigkeit in der Hauptluftleitung somit relativ gering ist. Außerdem gestattet der starre Durchströmungsquerschnitt der Drossel keine Anpassung des Schnellbremsbeschleunigers an unterschiedliche Hauptluftleitungen, große Volumenänderungen in der Hauptluftleitung ergeben also Änderungen der Druckabsenkungsgeschwindigkeit bei Ansprechen des Schnellbremsbeschleunigers. Nach Erreichen einer maximale Bremswirkung garantierenden Druckabsenkung in der Hauptluftleitung soll die Federbelastung des Kolbens ein Schließen des Entlüftungs- und Auslaßventils des Schnellbremsbeschleunigers bewirken, doch können hierbei Strömmungsvorgänge im Zusammenwirken mit dem bezogen auf die Kolbenfläche großen Ventilquerschnitt große Ungenauigkeiten hinsichtlich des Druckes bewirken, bei welchem das Entlüftungs- und Auslaßventil wieder schließt.

Es ist Aufgabe der Erfindung, ein Entlüftungsventil der eingangs genannten Art zu schaffen, welches durch Entfall der Übertragkammer eine raumsparende Bauweise ermöglicht welches unabhängig vom Volumen der Hauptluftleitung beim Ansprechen des Schnellbremsbeschleunigers stets eine rasche Druckabsenkung in der Hauptluftleitung bis auf einen bestimmten, festgelegten Wert bewirkt und welches somit durch Erhalten eines bestimmten, in seiner Höhe relativ genau festlegbaren Restdruckes in der Hauptluftleitung Druckluftenergie einspart und ein rasches Wiederlösen der Bremsen ermöglicht.

Diese Aufgabe wird nach der Erfindung dadurch gelöst, daß das Entlüftungsventil in die Verbindung des Auslaßkanals eines übertragkammerlosen Schnellbremsbeschleunigers zur Atmosphäre eingeordnet ist und einen Vorsteuerkolben aufweist, der vom Druck vor dem Absperrventil entgegen der Kraft einer Vorsteuerfeder beaufschlagt ist und ein Dreiwegeventil betätigt, daß einen mit seinem Druck den Kolben in Wirkungsrichtung der Feder beaufschlagenden Raum bei überwiegender Beaufschlagung des Vorsteuerkolbens durch die Vorsteuerfeder mit dem vor dem Absperrventil herrschenden Druck, bei überwiegender Druckluftbeaufschlagung des Vorsteuerkolbens dagegen mit der Atmosphäre verbindet.

Die nach weiteren Merkmalen der Erfindung vorteilhafte Ausgestaltung des Entlüftungsventils ist den Unteransprüchen entnehmbar.

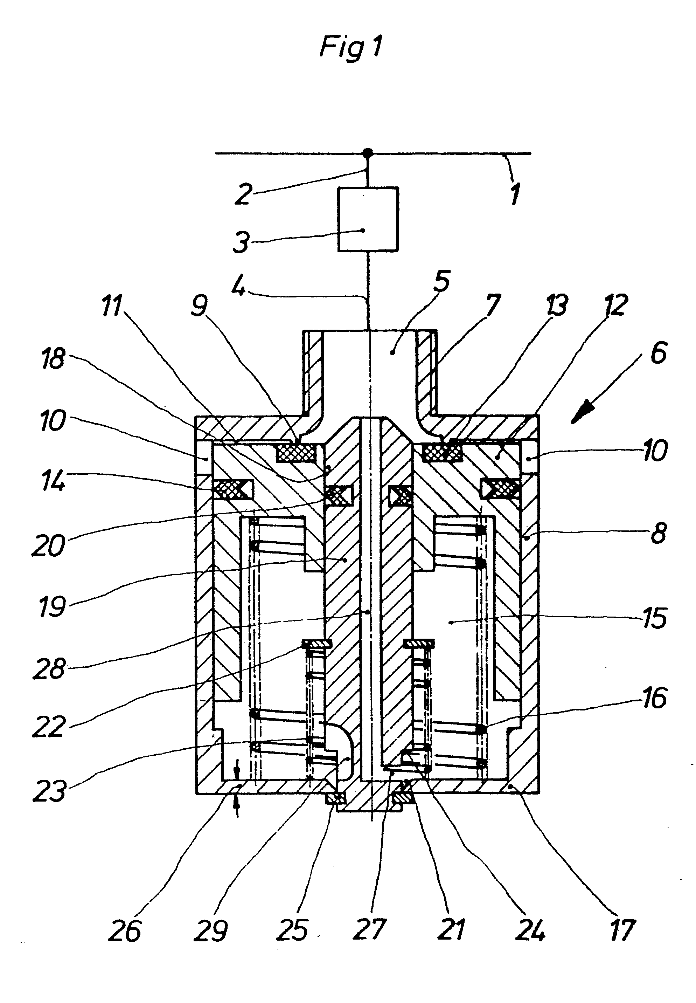

In der Zeichnung Fig. 1 bis Fig. 3 ist ein Ausführungsbeispiel eines nach der Erfindung ausgebildeten Entlüftungsventils im Schnitt in unterschiedlichen Schaltstellungen dargestellt.

Gemäß Fig. 1 führt von einer Hauptluftleitung 1 eine Zweigleitung 2 zu einem Schnellbremsbeschleuniger 3 üblicher Bauart. Der Auslaßkanal des Schnellbremschleunigers, der üblicherweise ungedrosselt mit einer Übertragkammer un über eine Drossel mit der Atmosphäre verbunden ist, wird sowohl von der entfallenden Übertragkammer wie von der Atmosphäre abgetrennt und über eine Leitungsverbindung 4 mit einem Eingangsanschluß 5 des Entlüftungsventils 6 verbunden. Praktisch wird der Leitungsanschluß 5, wie in Fig. 1 angedeutet, als Einschraubstutzen 7 ausgebildet, derart, daß das Entlüftungsventil 6 mit seinem Einschraubstutzen 7 unmittelbar und unter Entfall der in Fig. 1 nur zur Verdeutlichung dargestellten Leitungsverbindung 4 in den Anschlußstutzen für die entfallende Übertragkammer des Schnellbremsbeschleunigers 3 einschraubbar ist. Hierdurch ist eine besonders gedrängte und platzsparende Anordnung des Entlüftungsventils möglich.

Innerhalb des Gehäuses 8 des Entlüftungsventils 6 ist die Mündung des Leitungsanschlusses 5 von einem Ventilsitz 9 umgeben, an den sich nach radial außen ein über relativ großquerschnittige Durchbrechungen 10 des Gehäuses 8 ständig mit der Atmosphäre in Verbindung stehender Raum 11 anschließt. Dem Ventilsitz 9 steht ein an einem Kolben 12 angeordneter Ventildichtring 13 gegenüber; der Ventilsitz 9 und der Ventildichtring 13 bilden miteinander ein Absperrventil 9,13. Der Kolben 12 ist im Gehäuse 8 verschieblich gelagert, ein Dichtring 14 dient der Abdichtung des Kolbens 12 gegenüber dem Gehäuse 8. Auf der dem Raum 11 abgewandten Seite ist der Kolben 12 von einer sich in einem Raum 15 befindenden Feder 16 belastet, die Feder 16 stützt sich andererseits gegen eine den Raum 15 begrenzende Gehäusewand 17 ab. Der Kolben 12 ist als Ringkolben ausgebildet, dessen zentrische Bohrung 18 einen kleineren Durchmesser als der Ventilsitz 9 aufweist. In der Bohrung 18 ist verschieblich ein stößelartiger Vorsteuerkolben 19 gelagert, ein Dichtring 20 dient der Abdichtung des Vorsteuerkolbens 19 zur Bohrung 18. Der Vorsteuerkolben 19 endet einerseits radial innerhalb des Ventilsitzes 9 im inneren Endbereich des Leitungsanschlusses 5, durchragt andererseits den Raum 15, ist ohne Abdichtung mit geringem Spiel in einer Durchbrechung 21 der Gehäusewand 17 verschieblich geführt und endet in der freien Atmosphäre.

Zwischen die Gehäusewand 17 und einen innerhalb des Raumes 15 am Vorsteuerkolben 19 angeordneten Sicherungsring 22 ist eine Vorsteuerfeder 23 eingespannt. Beidseitig der Gehäusewand 17 ist der Vorsteuerkolben 19 mit Anschlägen 24 bzw. 25 versehen, welche mit der Gehäusewand 17 zusammenwirken und den möglichen Hub des Vorsteuerkolbens begrenzen. In beidseitig wenigstens der Stärke 26 der Gehäusewand 17 entsprechendem Abstand zu den Anschlägen 24 und 25 mündet zwischen den Anschlägen 24 und 25 ein im Vorsteuerkolben 19 angeordneter Querkanal 27 in den Raum 15, der andererseits mit einem Längskanal 28 im Vorsteuerkolben 19 in Verbindung steht, der ständig offen in den Leitungsanschluß 5 mündet. Weiterhin ist der Vorsteuerkolben 19 an seinem Umfang mit einer Längsnut 29 versehen, deren Länge wenigstens dem Abstand der Anschläge 24 und 25 voneinander entspricht und welche zu den Anschlägen 24 und 25 um ein wenigstens der Stärke 26 der Gehäusewand 17 entsprechendes Maß in Richtung zum Absperrventil 9, 13 hin versetzt angeordnet ist. Aus diesen Anordnungen ergibt sich, daß beim Anliegen des endseitigen Anschlages 25 an der Gehäusewand 17 der Querkanal 27 in den Raum 15 mündet und sich die Längsnut 29 völlig im Raum 15 befindet; bei Anliegen des im Raum 15 befindlichen Anschlages 24 an der Gehäusewand 17 dagegen überbrückt der Querkanal 27 die Gehäusewand 17, so daß der Raum 15 mit der Atmosphäre in Verbindung steht, und der Querkanal 27 mündet in die Atmosphäre.

Bei in Ruhezustand befindlichem, unbetätigtem Schnellbremsbeschleuniger 3 nimmt das Entlüftungsventil 6 die aus Fig. 1 ersichtliche Schaltstellung ein. Der Schnellbremsbeschleuniger 3 hält dabei den Leitungsanschluß 5 bzw. die Leitungsverbindung 4 von der Hauptluftleitung 1 und der Zweigleitung 2 abgesperrt, und im über den Längskanal 28, den Querkanal 27, den Raum 15 und den Ringspalt zwischen Durchbrechung 21 und Vorsteuerkolben 19 gedrosselt mit der Atmosphäre verbundenen Leitungsanschluß 5 herrscht Atmosphärendruck. Der Kolben 12 befindet sich unter der Kraft der Feder 16 in seiner oberen Stellung, in welcher das Absperrventil 9, 13, geschlossen ist. Der Vorsteuerkolben 19 befindet sich unter der Kraft der Vorsteuerfeder 23 ebenfalls in seiner oberen, durch Anlage des Anschlages 25 an der Gehäusewand 17 bestimmten Endlage, in welcher sich die Längsnut 29 und die Mündung des Querkanals 27 im Raum 15 befinden.

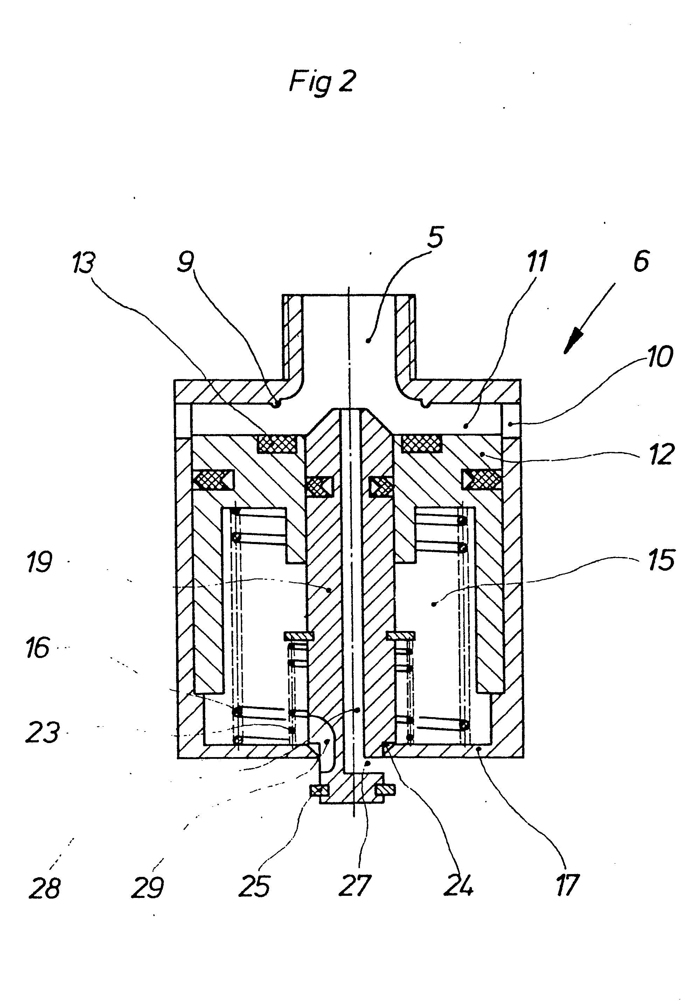

Wird bei auf Lösedruck der Druckluftbremsen aufgeladener Hauptluftleitung 1 eine Schnellbremsung eingesteuert, so sinkt der Druck in der Hauptluftleitung 1 wie üblich mit einem Druckabsenkungsgradienten, welcher die Ansprechschwelle des Schnellbremsbeschleunigers 3 zumindest erreicht. Der Schnellbremsbeschleuniger 3 spricht daher an und verbindet wie üblich die Zweigleitung 2 mit der Leitungsverbindung 4 bzw. dem Leitungsanschluß 5. Im Leitungsanschluß 5 erfolgt daher ein rascher Druckaufbau, welcher die Stirnfläche des Vorsteuerkolbens 19 und auch einen Teil der Ringfläche des Kolbens 12 beaufschlagt und die beiden Kolben 19 und 12 entgegen ihrer jeweiligen Federbelastung 23 bzw. 16 im Richtung zur Gehäusewand 17 verschiebt. Dabei wird das Absperrventil 9, 13 geöffnet, die Mündung des Querkanals 27 wird aus dem Raum 15 zur freien Atmosphäre hin verschoben und die Längsnut 29 gelangt in eine die Gehäusewand 17 überbrückende Lage. Diese Schaltstellung des Entlüftungsventils ist in Fig. 2 dargestellt ; die Lage des Kolbens 12 ist dabei durch Anlage an einem nicht näher bezeichneten Gehäuseanschlag und die Lage des Vorsteuerkolbens 19 durch Anlage des Anschlages 24 an der Gehäusewand 17 bestimmt.

In der somit erreichten Schaltstellung des Entlüftungsventils nach Fig. 2 kann die von der Hauptluftleitung 1 und die Zweigleitung 2 über den Schnellbremsbeschleuniger 3 in den Leitungsanschluß 5 eingesteuerte Druckluft über das geöffnete Absperrventil 9, 13 durch den Raum 11 und die Durchbrechungen 10 rasch und nahezu ungedrosselt zur Atmosphäre abströmen. Der sich im Raum 11 aufbauende Zwischendruck belastet dabei den Kolben 12 und hält diesen sicher in seiner unteren Schaltstellung. Ein kleinerer Anteil der in den Leitungsanschluß 5 eingesteuerten Druckluft strömt parallel zum beschriebenen Weg durch den Längskanal 28 und den Querkanal 27 zur Atmosphäre ab. Durch die großquerschnittige Öffnung zur Atmosphäre wird eine rasche Druckabsenkung in der Hauptluftleitung 1 erreicht, welche sicherstellt, daß der der Schnellbremsung entsprechende Druckabsenkungsgradient durch die Hauptluftleitung 1 auch auf die im Zugverband nachfolgenden Wagen übertragen wird und dort ebenfalls eine Schnellbremsung bewirkt.

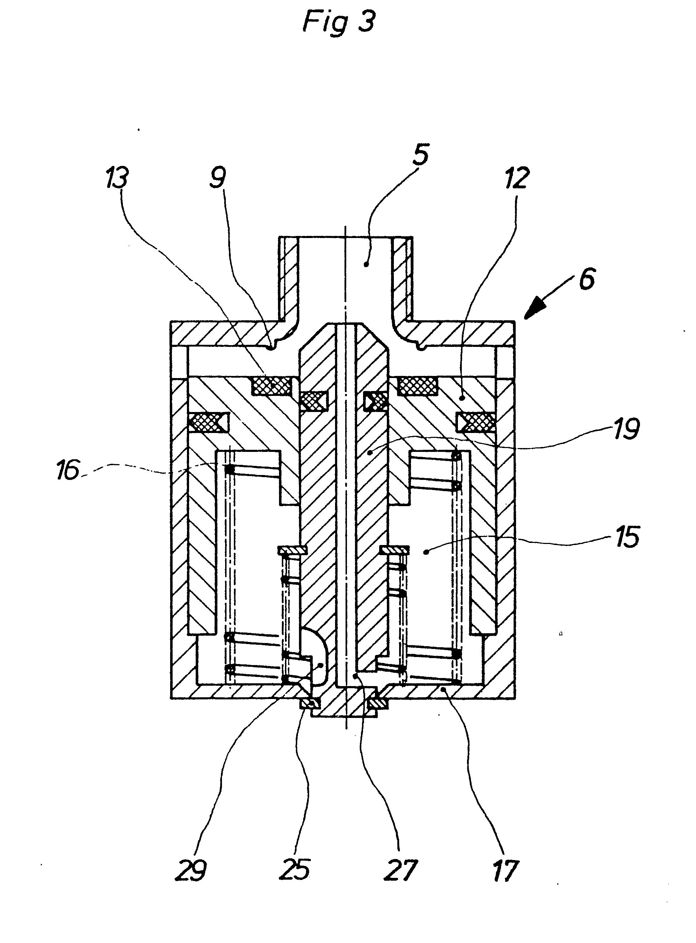

Bei Erreichen eines die maximale Bremswirkung der Druckluftbremse sicherstellenden Restdruckes in der Hauptluftleitung 1 und damit auch im Rohranschluß 5 — bei vielen bekannten Druckluftbremsen liegt die Lösedruckhöhe in der Hautluftleitung bei 5 bar und die erwähnte Restdruckhöhe in der Hauptluftleitung bei etwa 3,6 bar — vermag die Vorsteuerfeder 23 den Vorsteuerkolben 19 in Richtung zum Rohranschluß 5 hin bis zur Anlage des Anschlages 25 an der Gehäusewand 17 zu verschieben. Das Entlüftungsventil 6 nimmt dann die Schaltstellung nach Fig. 3 ein. Da die durch den Leitungsanschluß 5 in das Entlüftungsventil 6 einströmende Druckluft die Stirnfläche des Vorsteuerkolbens 19 voll beaufschlagt, kann das erwähnte Anheben des Vorsteuerkolbens 19 sehr genau bei einem ganz bestimmten, durch die Größe der Stirnfläche des Vorsteuerkolbens 19 und die Kraft der Vorsteuerfeder 23 bestimmten Restdruck im Leitungsanschluß 5 erfolgen.

Beim Anheben des Vorsteuerkolbens 19 gelangen die Längsnut 29 und die Mündung des Querkanals 27 wieder in den Raum 15, der daher vom im Leitungsanschluß 5 noch herrschenden Restdruck beaufschlagt wird. Die sich im Raum 15 aufbauende Druckbeaufschlagung mit dem Restdruck reicht vereint mit der Kraft der Feder 16 aus, den Kolben 12 in Richtung zum Leitungsanschluß 5 anzuheben und dabei das Absperrventil 9,13 wieder zu schließen. Damit ist die großquerschnittige Verbindung vom Leitungsanschluß 5 zur Atmosphäre unterbrochen. Das Entlüftungsventil 6 nimmt somit wieder seine Schaltstellung nach Fig. 1 ein, in welcher der Leitungsanschluß 5 nur über den Ringspalt zwischen Vorsteuerkolben 19 und Durchbrechung 21 gedrosselt mit der Atmosphäre in Verbindung steht. Im Leitungsanschluß 5 und damit am Ausgang des Schnellbremsbeschleunigers 3 erfolgt also nur mehr eine sehr langsame Druckabsenkung, wodurch der Schnellbremsbeschleuniger 3 veranlaßt wird, alsbald die Verbindung zwischen der Zweigleitung 2 und der Leitungsverbindung 4 zu unterbrechen. Infolge der nur noch sehr langsamen Druckabsenkung im Leitungsanschluß 5 kann sich nämlich der Druck in der Steuerkammer des Schnellbremsbeschleunigers 3 an den im Leitungsanschluß 5 herrschenden Restdruck angleichen und der somit beidseitig vom gleichen Restdruck beaufschlagte Steuerkolben des Schnellbremsbeschleunigers 3 bewirkt das Rückschalten des Schnellbremsbeschleunigers 3 in die Ruhestellung. Bei dem bekannten Aufbau des Schnellbremsbeschleunigers 3 und dessen Schaltverhalten erübrigen sich weitere Erläuterungen hierzu.

Nach Wiedererlangen der in Fig. 1 dargestellten Schaltstellung des Entlüftungsventils 6 und dem vorstehend beschriebenen Schließen der Verbindung von der Zweigleitung 2 zur Leitungsverbindung 4 durch den Schnellbremsbeschleuniger 3 entlüften sich die Leitungsverbindung 4, der Leitungsanschluß 5 und der Raum 15 durch den Ringspalt zwischen dem Vorsteuerkolben 19 und der Durchbrechung 21 zur Atmosphäre. Damit ist, nach rascher Druckabsenkung des in der Hauptluftleitung 1 herrschenden Druckes bis auf einen bestimmten Restdruck, der Ausgangszustand des Schnellbremsbeschleunigers 3 und des Entlüftungsventils 6 wieder erreicht. Beim nachfolgenden Lösen der Druckluftbremse muß der Druck in der Hauptluftleitung nur um die Druckdifferenz zwischen diesem Restdruck und dem Lösedruck angehoben werden, was relativ rasch und unter geringem Druckluftverbrauch möglich ist, da die ansonsten zum Anheben des Druckes in der Hauptluftleitung von Atmosphärendruck bis zu dem genannten Restdruck erforderliche Druckluftmenge eingespart wird.

Es ist hervorzuheben, daß durch das Entlüftungsventil 6 bei Ansprechen des Schnellbremsbeschleunigers 3 eine rasche Druckabsenkung in der Hauptluftleitung 1 bis auf den genau festlegbaren Restdruck möglich ist, wobei das Volumen der Hauptluftleitung praktisch ohne Einfluß bleibt. Falls in einem Zugverband dem mit dem Entlüftungsventil 6 ausgestatteten Fahrzeug benachbarte Fahrzeuge keinen Schnellbremsbeschleuniger aufweisen bzw. deren Schnellbremsbeschleuniger- bzw. Bremseinrichtung abgeschaltet ist, so wird durch das Entlüftungsventil 6 doch, unabhängig von der Verdoppelung bzw. Vervielfachung des dem Schnellbremsbeschleuniger 3 zugeordneten Volumens der Hauptluftleitung 1, bei Schnellbremsungen eine rasche Druckabsenkung in der Hauptluftleitung 1 gewährleistet, derart, daß bis zum nächstfolgenden Schnellbremsbeschleuniger im Zugverband eine dessen Ansprechen bewirkende Druckabsenkungsrate in der Hauptluftleitung sichergestellt ist.

Durch die Längsnut 29 wird in der Schaltstellung des Vorsteuerkolbens 19 gemäß Fig. 2 sichergestellt, daß der Raum 15 Atmosphärendruck aufweist, bzw., sollte er von einem vorangehenden Schaltvorgang des Entlüftungsventils 6 noch einen gewissen Überdruck aufweisen, rasch in die Atmosphäre entlüftet wird. Hierdurch wird gewährleistet, daß bei einem Ansprechen des Schnellbremsbeschleunigers 3 der Kolben 12 in jedem Falle durch den in den Leitungsanschluß 5 eingesteuerten Druck in seine untere, geöffnetem Absperrventil 9, 13 entsprechende Schaltstellung verschoben bzw. bis zum Erreichen des Restdruckes in dieser gehalten werden kann.

In Abänderung vom dargestellten und beschriebenen Ausführungsbeispiel ist es möglich, den Kolben 12 und/oder den Vorsteuerkolben 19 unter Inkaufnahme einer gewissen, geringen Undichtigkeit ohne Dichtring 14 bzw. 20 in der jeweiligen Zylinderbohrung zu führen ; die Undichtigkeit der Kolbenführungen hat bei entsprechender Abstimmung mit dem Ringspalt zwischen dem Vorsteuerkolben 19 der Durchbrechung 21 keine nachteiligen Folgen auf das Funktionsverhalten des Entlüftungsventils 6. Außerdem ist es möglich, bei Inkaufnahme geringer Funktionsabweichungen, die übliche Entlüftungsdüse für die Übertragkammer am Schnellbremsbeschleuniger 3 beizubehalten. Das Entlüftungsventil 6 gewährleistet auch hierbei ein rasches und vom Volumen der Hauptluftleitung unabhängiges Absenken des in der Hauptluftleitung 1 herrschenden Druckes bis auf eine bestimmte, genau festlegbare Restdruckhöhe bei Ansprechen des Schnellbremsbeschleunigers 3.

Bezugszeichenliste

1  Hauptluftleitung
2  Zweigleitung
3  Schnellbremsbeschleuniger
4  Leitungsverbindung
5  Leitungsanschluß
6  Entlüftungsventil
7  Einschraubstutzen
8  Gehäuse
9  Ventilsitz
10  Durchbrechung
11  Raum
12  Kolben
13  Ventildichtring
9, 13  Absperrventil
14  Dichtring
15  Raum
16  Feder
17  Gehäusewand
18  Bohrung
19  Vorsteuerkolben
20  Dichtring
21  Durchbrechung
22  Sicherungsring
23  Vorsteuerfeder
24  Anschlag
25  Anschlag
26  Stärke
27  Querkanal
28  Längskanal
29  Längsnut

**Ansprüche**

1. Entlüftungsventil für Schnellbremsbeschleuniger von Schienenfahrzeug-Druckluftbremsen, mit einem im Strömungskanal (2, 4, 10) der von der Hauptluftleitung (1) zur Atmosphäre abzulassenden Druckluft dem Luftauslaß (10) zur Atmosphäre vorgeordneten Absperrventil (9, 13), das von einem Kolben (12) gesteuert ist, der in Öffnungsrichtung vom Druck der auszulassenden Luft entgegen der Kraft einer Feder (16) belastet ist, dadurch gekennzeichnet, daß das Entlüftungsventil (6) in die Verbindung des Auslaßkanals (Leitungsverbindung 4) eines übertragkammerlosen Schnellbremsbeschleunigers (3) zur Atmosphäre eingeordnet ist und einen Vorsteuerkolben (19) aufweist, der vom Druck vor dem Absperrventil (9, 13) entgegen der Kraft einer Vorsteuerfeder (23) beaufschlagt ist und ein Dreiwegeventil betätigt, das einen mit seinem Druck den Kolben (12) in Wirkrichtung der Feder (16) beaufschlagenden Raum (15) bei überwiegender Beaufschlagung des Vorsteuerkolbens (19) durch die Vorsteuerfeder (23) mit dem vor dem Absperrventil (9, 13) herrschenden Druck, bei überwiegender Druckluftbeaufschlagung des Vorsteuerkolbens (19) dagegen mit der Atmosphäre verbindet.

2. Entlüftungsventil nach Anspruch 1, dadurch gekennzeichnet, daß das Dreiwegeventil bei überwiegender Druckluftbeaufschlagung des Vorsteuerkolbens (19) einen den Druck vor dem Absperrventil (9, 13) führenden Kanal (Leitungsanschluß 5) von dem Raum (15) abtrennt und mit der Atmosphäre verbindet.

3. Entlüftungsventil nach Anspruch 1 oder 2, dadurch gekennzeichnet, daß der Vorsteuerkolben (19) eine kleinere Beaufschlagungsfläche als der Kolben (12) aufweist.

4. Entlüftungsventil nach Anspruch 3, dadurch gekennzeichnet, daß der Kolben (12) als den stößelartig ausgebildeten Vorsteuerkolben (19) umschließender Ringkolben ausgebildet ist.

5. Entlüftungsventil nach Anspruch 4, dadurch gekennzeichnet, daß der Vorsteuerkolben (19) einerseits radial innerhalb des Ventilsitzes (9) bzw. der Ventildichtung (13) des Absperrventils (9, 13) endet, verschieblich im Kolben (12) geführt ist, den die Feder (16) aufnehmenden Raum (15) durchragt und nahe seines dem Absperrventil (9, 13) abgewandten Endes in einer Durchbrechung (21) einer Gehäusewand (17) verschieblich geführt ist, wobei er nahe dieses Endes beidseitig der Gehäusewand (17) angeordnete, mit der Gehäusewand (17) zusammenwirkende Anschläge (24, 25) aufweist, in beidseitig wenigstens der Stärke (26) der Gehäusewand (17) entsprechendem Abstand zu den Anschlägen (24, 25) die Mündung wenigstens eines Querkanals (27) aufweist, der mit einem absperrventilseitig offen mündenden Längskanal (28) im Vorsteuerkolben (19) verbunden ist, und an seinem Umfang wenigstens eine Längsnut (29) aufweist, deren Länge wenigstens dem Abstand der Anschläge (24, 25) entspricht und die zu diesen um ein wenigstens der Stärke (26) der Gehäusewand (17) entsprechendes Maß in Richtung zum Absperrventil (9, 13) versetzt angeordnet ist.

**Claims**

1. Pressure release valve for rapid braking activators of rail vehicle-compressed air brakes, with a check valve (9, 13) arranged before the air outlet (10) to the atmosphere in the flow duct (2, 4, 10) of the compressed air to be discharged from the main air line (1) to the atmosphere, which check valve is controlled by a piston (12), which is loaded against the force of a spring in the opening direction by the pressure of the air to be discharged, characterised in that the pressure release valve (6) is inserted in the connection of the discharge duct (line connection 4) of a rapid braking activator (3), not having a transfer chamber, to the atmosphere, and has a servo piston (19) which is acted upon by the pressure in front of the check valve (9, 13) against the force of a servo spring (23) and actuates a three-way valve, which, when the servo piston (19) is subjected predominantly to the action of the servo spring (23), connects a chamber (15), whose pressure acts upon the piston (12) in the operating direction of the spring (16), to the pressure prevailing in front of the check valve (9, 13), and, on the other hand, when the servo piston (19) is subjected predominantly to the action of compressed air, connects the chamber (15) to the atmosphere.

2. Pressure release valve according to claim 1, characterised in that when the servo piston (19) is subjected predominantly to the action of compressed air, the three-way valve separates a duct (line connection 5) conveying the pressure in front of the check valve (9, 13) from the chamber (15) and connects it to the atmosphere.

3. Pressure release valve according to claim 1 or 2, characterised in that the servo piston (19) has a smaller load surface than the piston (12).

4. Pressure release valve according to claim 3, characterised in that the piston (12) is constructed as a ring piston surrounding the plunger-like servo piston (19).

5. Pressure release valve according to claim 4, characterised in that the servo piston (19) ends on one side radially inside the valve seat (9) or the valve seal (13) of the check valve (9, 13), is guided displaceably in the piston (12), penetrates the chamber (15) receiving the spring (16) and, in the vicinity of its end turned away from the check valve (9, 13), is guided displaceably into a perforation (21) of a housing wall (17), whereby it has, in the vicinity of this end, lugs (24, 25) arranged on both sides of the housing wall (17) and cooperating with the housing wall (17), has the outlet of at least one transverse duct (27) in spaced relationship to the lugs (24, 25), the distance on both sides corresponding to at least the thickness (26) of the housing wall (17), the transverse duct (27) being connected to a longitudinal duct (28) in the servo piston (19) which opens out on the check valve side, and having on its circumference at least one longitudinal groove (29), whose length corresponds to at least the spacing of the lugs (24, 25) and which is arranged offset relative to these by an amount corresponding at least to the thickness (26) of the housing wall (17) in the direction of the check valve (9, 13).

**Revendications**

1. Soupape de mise à l'atmosphère pour des accélérateurs pour freins à action rapide pour des freins à air comprimé de véhicules sur rails, du type comportant une soupape d'arrêt (9, 13) montée, dans le canal d'écoulement de l'air comprimé à évacuer par la conduite générale (1) dans l'atmosphère, en amont de la purge d'air (11) vers l'atmosphère, ladite soupape d'arrêt étant commandée par un piston (12) qui est chargé, en direction de l'ouverture et à l'encontre d'un ressort, par la pression de l'air à évacuer, caractérisée par le fait que la soupape de mise à l'atmosphère (6) est montée dans la communication entre le canal d'échappement (conduite de liaison 4) d'un accélérateur pour frein à action rapide (3), sans chambre de transmission, et l'atmosphère, et comporte un piston pilote (19) qui est chargé par la pression qui règne en avant de la soupape d'arrêt (9, 13), à l'encontre de la force d'un ressort pilote (23) et actionne une soupape à trois voies qui relie une chambre (15) chargeant par sa pression le piston (12) dans le sens de l'action du ressort (16) et, lorsque la charge du piston pilote (19) par le ressort pilote (23) prédomine, avec la pression qui règne en amont de la soupape d'arrêt (9, 13) mais avec l'atmosphère lorsque prédomine la charge en air comprimé qui s'exerce sur le piston pilote (19).

2. Soupape de mise à l'atmosphère selon la revendication 1, caractérisée par le fait que la soupape à trois voies, lorsque prédomine la charge en air comprimé du piston pilote (19), sépare un canal (raccord de conduite) dans lequel règne la pression établie en amont de la soupape d'arrêt (9, 13), de la chambre (15), et le relie à l'atmosphère.

3. Soupape de mise à l'atmosphère selon la revendication 1 ou 2, caractérisée par le fait que le piston pilote (19) comporte une surface chargée par la pression, qui est plus faible que celle du piston (12).

4. Soupape de mise à l'atmosphère selon la revendication 3, caractérisée par le fait que le piston (12) est réalisé sous la forme d'un piston annulaire entourant le piston pilote (19) réalisé sous la forme d'un poussoir.

5. Soupape de mise à l'atmosphère selon la revendication 4, caractérisée par le fait que le piston pilote (19) se termine sur un côté radialement à l'intérieur du siège de soupape (9) ou de l'étanchéité de soupape (13) de la soupape d'arrêt (9, 13), est guidé dans le piston (12), passe par la chambre (15) recevant le ressort (16) et est guidé, près de son extrémité éloignée de la soupape d'arrêt (9, 13), dans une ouverture (21) d'une paroi de carter (17), alors qu'il comporte, près de cette extrémité, deux butées (24, 25) disposées de part et d'autre de la paroi de carter (17) et coagissant avec ces dernières, et à une distance de ces butées (24, 25) au moins égale à l'épaisseur (26) de la paroi de carter (17), l'embouchure d'au moins un canal transversal (27) qui communique avec un canal longitudinal (19) prévue dans le piston pilote (19) et débouchant librement du côté de la soupape d'arrêt, et qu'il présente à sa périphérie au moins une gorge longitudinale (29) dont la longueur correspond au moins à la distance entre les butées (24, 25) et qui est décalée par rapport à ces dernières, dans la direction de la soupape d'arrêt (9, 13), d'une valeur qui correspond au moins à l'épaisseur (26) de la paroi de carter (17).

## Fig 1

Fig 2

## Fig 3